# FASCICULE DE BREVET EUROPEEN

(11) **EP 0 681 242 B1**
(45) Date de publication et mention de la délivrance du brevet: **16.07.1997**
(21) Numéro de dépôt: 95401026.0
(22) Date de dépôt: 04.05.1995
(51) Int. Cl.: G06F 12/14, G06F 1/00

(54) **Procédé de sécurisation des accès aux cartes amovibles pour ordinateur**
Verfahren zum Sichern des Zuganges zu abnehmbaren Karten eines Rechners
Secure access method for removable cards for computers

(30) Priorité: 05.05.1994 FR 9405552
(43) Date de publication de la demande: 08.11.1995
(73) Titulaire: GEMPLUS, 13420 Gemenos (FR)
(72) Inventeur: Leroux, Jean-Yves, Cabinet Ballot-Schmit, F-94230 Cachan (FR)
(74) Mandataire: Schmit, Christian Norbert Marie

(56) Documents cités:
- EP-A- 0 421 409
- EP-A- 0 568 438
- FR-A- 2 693 575
- US-A- 4 453 074

## Description

L'invention concerne un procédé de sécurisation des accès aux cartes amovibles pour ordinateur. Elle s'applique aux cartes à mémoire de masse pour micro-ordinateurs (ou ordinateurs personnels (PC)) et aux cartes à fonction entrée/sortie. Elle s'applique en particulier aux cartes répondant au standard de la norme PCMCIA.

Les cartes à mémoire de masse, parfois appelées encore PC-Cards, comportent plusieurs puces de mémoire et un connecteur (connecteur femelle de 68 broches selon la norme PCMCIA de "Personal Computer Memory Card International Association" 1030B East Duane Avenue Sunnyvale, California). La carte est enfichable dans un connecteur correspondant (mâle) de l'ordinateur. Les connexions sont telles que la mémoire puisse être adressée par un port d'entrée-sortie parallèle du PC, soit comme si la mémoire était une mémoire de masse magnétique, soit comme si elle était une extension de mémoire vive de l'ordinateur.

Outre les cartes à mémoire de masse il existe par ailleurs des cartes pour ordinateurs personnels qui ont des fonctions de communication entre l'ordinateur et l'extérieur, et qui comportent donc non seulement un connecteur destiné à assurer la liaison avec l'ordinateur personnel mais aussi des moyens de connexion vers l'extérieur. Ces cartes sont appelées cartes à fonction Entrée/Sortie" ou "cartes à fonction I/O". L'exemple typique d'une fonction de communication est le modem, qui est raccordé par un premier connecteur à l'ordinateur et par un deuxième connecteur à une ligne téléphonique pour l'envoi de données numériques sur la ligne. Un autre exemple de carte à fonction de communication serait une carte pour réseau en zone rapprochée où la communication avec l'extérieur se fait non pas par un connecteur à contacts matériels mais par transmission hertzienne dans un environnement rapproché.

Les cartes de communication existantes utilisent en général la sortie RS232C des ordinateurs, qui délivre des données numériques sous forme série, bien adaptée à la communication par modem ou par radio; ou encore les cartes de communication sont directement montées à l'intérieur de l'ordinateur et ne se présentent pas sous forme de cartes enfichables.

Il existe en outre des cartes de communication enfichables sur le connecteur d'extension mémoire prévu dans de nombreux ordinateurs. Cette connexion est faite sans qu'aucun problème de protocole de communication n'apparaisse. On trouvera la description d'une telle carte dans la demande de brevet français n° 92 08554 publiée sous le n° 2 693 575.

Le problème technique qu'a cherché à résoudre le demandeur est la protection des accès par l'ordinateur à de telles cartes en modifiant le moins possible l'électronique de ces cartes et plus précisément en conservant les cartes standard, la protection étant ainsi la moins couteuse possible.

On pourra se reporter aux documents US-A-4 453 074 (D1) et EP-A-0 421 409 qui constituent un état de la technique portant sur la protection des cartes à puces.

La présente invention a pour objet un procédé de sécurisation des accès aux cartes connectées à un ordinateur selon la revendication 1, ces cartes (4) comprenant un descripteur (D) destiné à contenir des informations de reconnaissance de la carte et de la configuration permettant à l'ordinateur d'utiliser la carte pour l'application dans laquelle elle est définie, caractérisé en ce qu'il comporte, avant utilisation de la carte, une phase de personnalisation de la carte durant laquelle on chiffre au moins une information du descripteur au moyen d'une fonction de chiffrement f et d'un mot de passe attribué à un ou plusieurs utilisateurs habilités, le descripteur contenant ainsi à la fin de la phase de personnalisation au moins une information chiffrée, en ce que lors d'utilisations ultérieures, l'utilisateur présente son mot de passe, et en ce que le système d'exploitation de l'ordinateur lance une lecture du descripteur (D) et l'exécution d'une fonction f⁻¹ de déchiffrement de ou des information(s) chiffrée(s) lue(s) dans le descripteur à partir du mot de passe entré par l'utilisateur de manière à déchiffrer l'information chiffrée, où si le mot de passe donné par l'utilisateur est le même que celui utilisé pour le chiffrement, la ou les information(s) déchiffrée(s) permettront à l'ordinateur d'utiliser la carte pour l'application dans laquelle elle est définie.

La présente invention sera mieux comprise à lecture de la description suivante qui est donnée à titre d'exemple illustratif et non limitatif et en regard des figures qui représentent :
- la figure 1, le schéma d'un système mettant en oeuvre le procédé selon l'invention,
- la figure 2, les étapes principales du procédé selon l'invention,
- la figure 3, l'emplacement du descripteur sur la carte,
- la figure 4, la zone contenant les informations de configuration du descripteur de la carte.

L'invention s'applique à des cartes répondant à la norme PCMCIA de type carte à mémoire, à entrée/sortie (carte modem, réseau, pager) ou carte à mémoire de masse.

Des couches logicielles du standard PCMCIA permettent à un ordinateur de type PC de reconnaître automatiquement la carte PCMCIA qui vient d'être insérée et de la configurer convenablement en rapport avec ses ressources propres c'est à dire ses espaces mémoire et ses entrées-sorties. On pourra pour cela se reporter au document "PCMCIA Socket Services Interface Specification" diffusé par "Personal Computer Memory Card International Association".

La reconnaissance de la carte se fait par lecture du descripteur de la carte. Le descripteur ou CIS (Card Information Structure) définit le type de carte, ses caractéristiques électriques et dynamiques, ses espaces entrée/sortie disponibles et configurables.

Le descripteur D comprend en effet deux types d'informations. Il comprend des informations générales IG définissant le type de carte c'est à dire s'il s'agit d'une carte à mémoire ou d'une carte entrée/sortie (carte modem, carte réseau), la date de fabrication, le numéro de la carte, le nom du fabricant.

Les informations générales définissent également les caractéristiques électriques et dynamiques de la carte. Ces caractéristiques comportent notamment les tensions minimum et maximum d'alimentation, la tension de programmation de la mémoire non volatile, le courant pour lire la carte, les temps d'accès.

Le descripteur comprend en outre une zone d'informations de configuration IC. Ces informations correspondent à des paramètres de fonctionnement indispensables pour que ordinateur et carte coopèrent de façon transparente à l'utilisateur. Cette zone comprend ainsi un champ d'information L définissant la longueur du buffer d'échange des données, un champ d'adresse du registre de configuration à laquelle la donnée de configuration définie par l'ordinateur à chaque insertion d'une carte, doit être installée, un champ I définissant les interruptions c'est à dire les moyens d'échange entre carte et ordinateur.

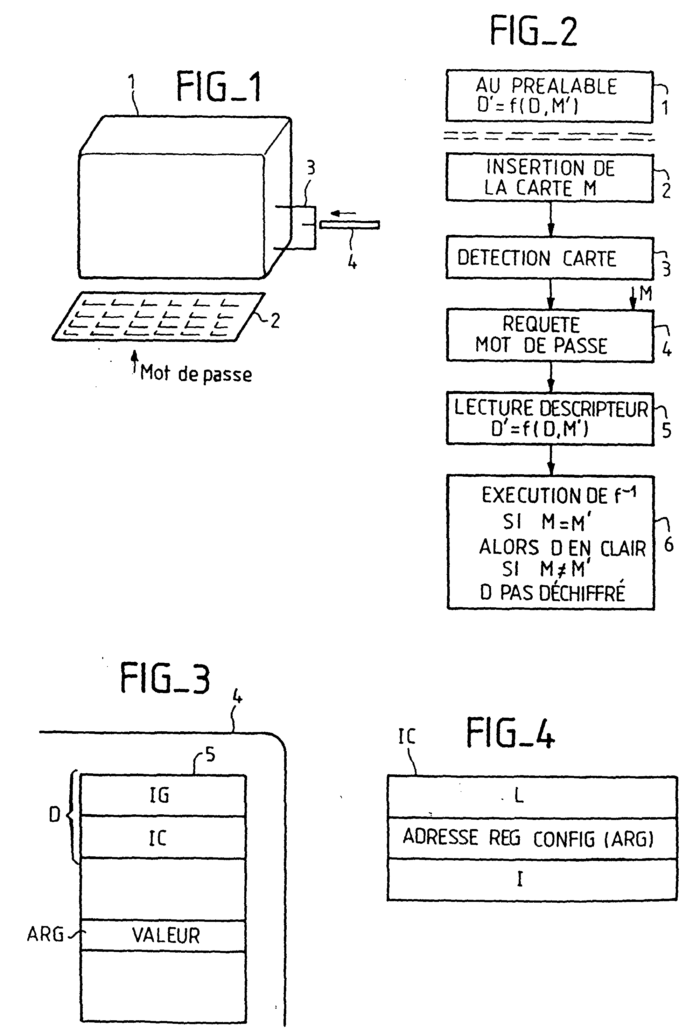

Lorsqu'un utilisateur insère une carte 4 dans le lecteur 3 (socket) de l'ordinateur 1, l'ordinateur détecte la présence de la carte (de façon connue par exemple par détection d'un niveau de tension sur la liaison) et envoie un signal de lecture de la mémoire non volatile 5 dans laquelle est enregistré le descripteur D de la carte afin de connaître les informations générales IG sur la carte et les informations de configuration pour pouvoir configurer la carte. On pourra se reporter aux schémas des figures 1, 3 et 4 pour mieux comprendre la description qui vient d'être faite ainsi qu'au schéma de la figure 2 pour la suite.

Conformément à l'invention, avant personnalisation des cartes, c'est à dire avant toute utilisation, on a procédé au chiffrement du descripteur à partir d'une fonction de chiffrement connue utilisant un mot de passe prédéterminé M' réservé à un utilisateur habilité ou à plusieurs utilisateurs habilités.

On prendra par exemple comme fonction de chiffrement f, un algorithme de chiffrement tel que l'algorithme DES (Data Encryption Standard).

On peut ainsi chiffrer tout ou partie du descripteur. Selon un mode préféré de réalisation, on a choisi de chiffrer une information de configuration. Plus précisément, selon cet exemple préféré on chiffre l'information indiquant l'adresse du registre de configuration ARG.

Le champ d'adresse du registre de configuration donne l'adresse à laquelle doit être installée la donnée de configuration, cette donnée pouvant être elle même par exemple une adresse mémoire.

L'adresse à laquelle doit être installée la donnée de configuration est chiffrée par le mot de passe M'. Ainsi lorsqu'un utilisateur insère une carte et qu'il ne connaît pas le mot de passe, l'ordinateur ne peut connaître l'adresse du registre de configuration et ne peut en conséquence configurer la carte.

En effet selon le procédé, lorsque le descripteur D ou une partie des informations du descripteur a été chiffré avec le mot de passe M' du ou des utilisateurs D'=f(D,M') (étapes 1 fig. 2), à chaque insertion de la carte (étape 2, fig. 2), l'utilisateur doit présenter son mot de passe (étape 4). Pour cela, il tapera le mot de passe à partir du clavier de l'ordinateur. L'ordinateur lance alors l'exécution de la fonction du déchiffrement f⁻¹ (qui est l'inverse de la fonction qui a servi au chiffrement) avec le mot de passe entré par l'utilisateur. Si ce mot de passe est le même que celui qui a servi au chiffrement, l'ordinateur obtient la valeur de l'adresse en clair et peut installer à l'adresse indiquée la donnée de configuration pour l'application lancée par l'utilisateur (étape 6).

Ainsi, tout accès à la carte est protégé tant que le mot de passe correct n'est pas entré. Cette protection est obtenue sans aucune modification du matériel (électronique).

Le lancement d'une application faisant appel à l'utilisation d'une carte à mémoire de masse ou d'une carte à entrée sortie, comporte une requête consistant à demander le mot de passe suivie de la lecture du descripteur et de l'exécution de la fonction de déchiffrement.

De préférence le descripteur chiffré sera mémorisé dans une mémoire non volatile 4, électriquement effaçable (EEPROM). Ainsi il sera possible de modifier le mot de passe si le besoin se présente. Il suffira alors de réinscrire les nouvelles données chiffrées du descripteur à la place des anciennes en opérant un simple effacement de cette mémoire et une nouvelle écriture du descripteur.

## Revendications

1. Procédé de sécurisation des accès aux cartes de type mémoire de masse et/ou de cartes à fonction entrée-sortie connectées à un ordinateur (1), ces cartes (4) comprenant un descripteur (D) destiné à contenir des informations de reconnaissance de la carte et de la configuration permettant à l'ordinateur d'utiliser la carte pour l'application dans laquelle elle est définie, caractérisé en ce qu'il comporte, avant utilisation de la carte, une phase de personnalisation de la carte durant laquelle on chiffre au moins une information du descripteur au moyen d'une fonction de chiffrement f et d'un mot de passe attribué à un ou plusieurs utilisateurs habilités, le descripteur contenant ainsi à la fin de la phase de personnalisation au moins une information chiffrée, en ce que lors d'utilisations ultérieures, l'utilisateur présente son mot de passe, et en ce que le système d'exploitation de l'ordinateur lance une lecture du descripteur (D) et l'exécution d'une fonction f⁻¹ de déchiffrement de ou des information(s) chiffrée(s) lue(s) dans le descripteur à partir du mot de passe entré par l'utilisateur de manière à déchiffrer l'information chiffrée, où si le mot de passe donné par l'utilisateur est le même que celui utilisé pour le chiffrement, la ou les information(s) déchiffrée(s) permettront à l'ordinateur d'utiliser la carte pour l'application dans laquelle elle est définie.

2. Procédé de sécurisation selon la revendication 1, caractérisé en ce que le descripteur (D) comporte des champs d'informations générales (IG) sur la carte et des champs d'informations de configuration (IC).

3. Procédé de sécurisation selon la revendication 2, caractérisé en ce que parmi les champs d'information de configuration (IC), le descripteur comporte un champ donnant l'adresse (ARG) à laquelle doit être installée la donnée de configuration et en ce que l'information chiffrée est cette adresse (ARG).

4. Procédé de sécurisation selon l'une quelconque des revendications précédentes, caractérisé en ce que le descripteur (D) de la carte est mémorisé dans une mémoire non volatile (5).

5. Procédé de sécurisation selon la revendication 4, caractérisé en ce que la mémoire (5) est une mémoire électriquement effaçable (EEPROM).

6. Procédé de sécurisation selon l'une quelconque des revendications précédentes, caractérisé en ce que les cartes sont des cartes à mémoire de masse et/ou des cartes d'entrée-sortie.

7. Procédé de sécurisation selon l'une quelconque des revendications 1 à 6, caractérisé en ce que les cartes sont des cartes répondant à la norme PCMCIA.

## Patentansprüche

1. Verfahren zum Sichern des Zuganges zu Gesamtspeicherkarten bzw. PC-Karten und/oder zu Karten mit Eingangs-Ausgangs-Funktion, die mit einem Rechner (1) verbunden sind, wobei diese Karten (4) einen Descriptor (D) aufweisen, der dazu bestimmt ist, Informationen der Erkennung der Karte und der Konfiguration zu enthalten, die es dem Rechner gestattet, die Karte für die Verwendung zu benutzen, für die sie bestimmt ist, dadurch gekennzeichnet, daß es vor der Benutzung der Karte eine Phase der Personalisierung der Karte aufweist, während welcher man mindestens eine Information des Descriptors mittels einer Verschlüsselungsfunktion f und eines Kennwortes verschlüsselt, das einem oder mehreren befugten Benutzern zugeordnet ist, wobei der Descriptor somit am Ende der Personalisierungsphase mindestens eine vershlüsselte Information enthält, daß während späterer Benutzungen der Benutzer sein Kennwort vorweist, und daß das Betriebssystem des Rechners eine Ablesung des Descriptors (D) und die Ausführung einer Funktion f⁻¹ zur Entschlüsselung der verschlüsselten Information(en) veranlaßt, die, vom Kennwort ausgehend, das vom Benutzer eingegeben wurde, in den Descriptor eingelesen wurde(n), um die verschlüsselte Information zu entschlüsseln, wobei dann, wenn das vom Benutzer eingegebene Kennwort dasselbe wie dieses ist, das für die Verschlüsselung verwendet wurde, es die verschlüsselte(n) Information(en) dem Rechner gestatten, die Karte für die Verwendung zu benutzen, für welche sie bestimmt ist.

2. Verfahren zum Sichern nach Anspruch 1, dadurch gekennzeichnet, daß der Descriptor (D) ein Feld für allgemeine Informationen (IG) auf der Karte sowie Felder für Konfigurationsinformationen (IC) aufweist.

3. Verfahren zum Sichern nach Anspruch 2, dadurch gekennzeichnet, daß der Descriptor unter den Feldern für Konfigurationsinformationen (IC) ein Feld aufweist, das die Adresse (ARG) angibt, an welcher die Konfigurationsgröße vorliegen muß, und daß die verschlüsselte Information diese Adresse (ARG) ist.

4. Verfahren zum Sichern nach irgendeinem der vorangehenden Ansprüche, dadurch gekennzeichnet, daß des Descriptor (D) der Karte in einem nichtflüchtigen Speicher (5) gespeichert ist.

5. Verfahren zum Sichern nach Anspruch 4, dadurch gekennzeichnet, daß der Speicher (5) ein elektrisch löschbarer Speicher (EEPROM) ist.

6. Verfahren zum Sichern nach irgendeinem der vorangehenden Ansprüche, dadurch gekennzeichnet, daß die Karten Gesamtspeicherkarten bzw. PC-Karten und/oder Eingangs-Ausgangs-Karten sind.

7. Verfahren zum Sichern nach irgendeinem der Ansprüche 1 bis 6, dadurch gekennzeichnet, daß die Karten Karten sind, die der Norm PCMCIA entsprechen.

## Claims

1. A method of providing security-protected access to cards of the file store type and/or input-output cards connected to a computer (1), wherein these cards (4) have a descriptor (D) designed to contain information so that the card and the configuration allowing the computer to use the card for the application for which it has been set up can be recognised, characterised in that the card is personalised before it is used, at which stage at least one datum of the descriptor is encoded by means of an encryption function f and a password assigned to one or several authorised users, so that, at the end of the personalisation phase, the descriptor contains at least one encoded datum, and, during subsequent user sessions, the user enters his password and the computer operating system initiates reading of the descriptor (D) and executes a function f⁻¹ to decode the encrypted datum or data it has read in the descriptor on the basis of the password entered by the user so as to decode the encrypted information and, if the password entered by the user is the same as that used for encryption, the datum or data will allow the computer to use the card for the application for which it was designed.

2. A method of security protection as claimed in claim 1, characterised in that the descriptor (D) contains fields of general information (IG) about the card and fields of configuration information (IC).

3. A method of security protection as claimed in claim 2, characterised in that included in the configuration information fields (IC), the descriptor has a field indicating the address (ARG) to which the configuration data must be installed and the encrypted information is this address (ARG).

4. A method of security protection as claimed in any one of the preceding claims, characterised in that the descriptor (D) of the card is stored in a non-volatile memory (5).

5. A method of security protection as claimed in claim 4, characterised in that the memory (5) is an electrically erasable memory (EEPROM).

6. A method of security protection as claimed in any one of the preceding claims, characterised in that the cards are file store cards and/or input-output cards.

7. A method of security protection as claimed in any one of claims 1 to 6, characterised in that the cards comply with the PCMCIA standard.
